# EUROPÄISCHE PATENTANMELDUNG

(11) **EP 0 673 998 A2**
(43) Veröffentlichungstag der Anmeldung: **27.09.1995**
(21) Anmeldenummer: 94250217.0
(22) Anmeldetag: 02.09.1994
(51) Int. Cl.: C12G 3/04

(54) **Komposition und Verfahren zur Herstellung alkoholischer Getränke mit weinbrandähnlichem Geschmack**

(30) Priorität: 13.09.1993 DE 4331437
(71) Anmelder: Berliner Bären Siegel GmbH Feine Spirituosenspezialitäten, D-10365 Berlin (DE)
(72) Erfinder: Langguth, Johann Wolfgang, D-56841 Traben-Trarbach (Mosel) (DE); Ulrich, Sabine, D-13186 Berlin (DE)

(57) **Zusammenfassung**

Die Erfindung betriffl eine Komposition zur Herstellung von Spirituosen mit weinbrandähnlichem Geschmack sowie ein Verfahren zu deren Erzeugung.

Die Herstellung von Spirituosen mit weinbrandähnlichem Geschmack ist seit langem bekannt. Als entscheidende Aromaspender dienen Weinbrand mit starkem Boquet und/oder abgelagertes Weindestillat. Diese werden entweder mit Weindestillat oder Neutralalkohol verschnitten und sodann mit enthärtetem Wasser auf Trinkstärke herabgesetzt. Der wesentliche Nachteil der Herstellung vorgenannter Spirituosen besteht in der Verwendung von in Holzfässern gelagerten Ausgangsstoffen Weinbrand und/oder Weindestillat.

Die Erfindungsaufgabe bestand darin, eine Komposition zur Herstellung von Spirituosen mit weinbrandähnlichem Geschmack und mit einem Ethanolanteil von 20 %vol. bis 40 %vol. ohne Bestandteilen an von in Holzfässern gelagertem Weindestillat und/oder Weinbrand anzugeben und ein Verfahren zur Herstellung der neuartigen Spirituose aufzufinden.

Erfindungsgemäß besteht die Komposition aus kupferblasenfrisches Weindestillat, aus Rumdestillat resp. einer Mischung aus Rumdestillaten und aus natürlichem Brandyaroma. Die Anteile der drei vorgenannten Bestandteile und deren Charakteristika werden genannt. In der fertigen Spirituose sollen erfindungsgemäß 5 %vol. bis 15 %vol. der Komposition enthalten sein.

## Beschreibung

Die Erfindung betrifft eine Komposition zur Herstellung alkoholischer Getränke mit weinbrandähnlichem Geschmack sowie ein Verfahren zur Erzeugung dieser alkoholischen Getränke.

Spirituosen sind seit langem bekannt. Sie dienen als alkoholische Getränke dem menschlichen Genuß. Grundlage der Spirituosen ist eine Wasser-Ethanol-Mischung, die grundsätzlich eine Volumenkonzentration an Ethanol von 20 % bis 60 % aufweist. Spirituosen, deren eine Basis Weinbrand darstellt, werden im allgemeinen der Gattung Branntwein zugeordnet. Handelsübliche Sorten dieser Gattung sind die sogenannten Weinbrandverschnitte.

Die Herstellung der sog. Weinbrandverschnitte ist bekannt. Als Aromaspender dienen Weinbrand mit starkem Bouquet und/oder gut abgelagertes Weindestillat (siehe: Ullmanns Encyklopädie der technischen Chemie. Dritte, völlig neu gestaltete Auflage. 16. Band. München & Berlin: 1965, Urban & Schwarzenberg S. 167; H. Wüstenfeld/G. Haeseler: Trinkbranntwein und Liköre. 4. Auflage, Berlin und Hamburg: 1964, Paul Parey S. 65). Diese werden entweder mit Weindestillat oder erstklassigen Neutralalkohol verschnitten und darauf mit enthärtetem Wasser auf Trinkstärke verdünnt. Der wesentliche Nachteil dieses Verfahrens zur Herstellung sog. Weinbrandverschnitte besteht in der Verwendung der durch Lagerung in Holzfässern gereiften Spirituose Weinbrand und/oder des durch Lagerung in Holzfässern gereiften Weindestillates.

Es besteht die Auffassung der Fachwelt (siehe: L. Acker et. al.: Handbuch der Lebensmittelchemie. Band VII. Alkoholische Genußmittel. Berlin u.a.: 1968, Springer S. 496ff), daß die Reifung feiner Sorten in Gegenwart von Holz, vorzugsweise in Holzfässern zu erfolgen hat. Das Holz vermittelt nicht nur bestimmte chemische und/oder physiko-chemische Prozesse bei der Lagerung, sondern liefert grundsätzlich einen eigenen Beitrag zum Bouquet der gelagerten Spirituose. Die Lagerung, insbesondere die Faßlagerung, von Spirituosen stellt eine mit beträchtlichen Aufwand verbundene Methode zur Alterung dar. Es hat daher nicht an Versuchen gefehlt, Spirituosen künstlich zu reifen; älteste Versuche lassen sich bis in das vorherige Jahrhundert zurückverfolgen. Eine umfassende Übersicht über die älteren Arbeiten gibt H. Wüstenfeld (Trinkbranntweine und Liköre. Dritte Auflage. Berlin/Hamburg 1953. Paul Parey. Wüstenfeld kommt, wie auch später L. Acker (siehe Blatt 1), zu der Erkenntnis, daß der richtige Weg zur künstlichen Alterung noch nicht gefunden ist. Das Ziel der Erfindung besteht in der Angabe einer Komposition und eines Verfahrens zur Herstellung alkoholischer Getränke mit weinbrandähnlichem Geschmack, sog. Weinbrandverschnittes, unter Vermeidung des genannten Mangels des Standes der Technik.

Der Erfindung liegt die Aufgabe zu grunde, eine Komposition und ein Verfahren zur Herstellung alkoholischer Getränke mit weinbrandähnlichem Geschmack, sog. Weinbrandverschnitt, mit einem Ethanolanteil von 20 % vol. bis 40 % vol. aufzufinden, bei dem ohne Einsatz von durch Lagerung in Holzfässern gereiften Weinbrandes und/oder Weindestillates allein durch Mischen geeigneter Roh- und Hilfsstoffe die Sensorik von nach vorbekannten Verfahren aus in Holzfässern gelagertem Weinbrand und/oder Weindestillat gewonnenen Getränken vermittelt wird. Weiterhin bestand die Aufgabe, daß die unter Einsatz der aufzufindenden Komposition hergestellten alkoholischen Getränke auch bei niedrigeren Ethanolgehalten die Sensorik einer höherprozentigen vorbekannten Spirituosen mindestens aufweisen.

Die Erfindungsaufgabe wurde in der Art gelöst, daß bei der Herstellung alkoholischer Getränke mit weinbrandähnlichem Geschmack, sog. Weinbrandverschnitt, und mit einem Ethanolgehalt von 20 % vol. bis 40 % vol. erfindungsgemäß eine Komposition mit einem Volumenverhältnis von
- 400 bis 1200 Teilen kupferblasenfrisches Weindestillat mit einem Ethanolgehalt von 56 % vol. bis 74 % vol.;
- 6 bis 14 Teilen eines Rumdestillates oder einer Mischung von Rumdestillaten mit einem Ethanolgehalt von 60 % vol. bis 68 % vol.;
- 5 bis 15 Teilen natürlichem Brandyaroma

einzusetzen ist, wobei der Anteil dieser Komposition im fertigen alkoholischen Getränk 5 % vol. bis 15 % vol., vorzugsweise 6 % vol. bis 10 % vol. beträgt. Weitere vorteilhafte Ausgestaltungen der Erfindung können den Patentansprüchen entnommen werden.

Es war nicht bekannt und nicht voraussehbar, daß die Kombination eines nicht in Holzfässern gelagerten Weindestillates (Rauhbrand) mit vergleichsweise geringen Anteilen Rumdestillat und Brandyaroma in den angegebenen Volumenverhältnissen den daraus hergestellten alkoholischen Getränken eine Sensorik verleiht, die den aus in Holzfässern gereiften Weindestillat hergestellten sog. Weibrandverschnitten mindestens entspricht, sogar bei niedrigeren Ethanolgehalten.

Unter kupferblasenfrisches Weindestillat versteht diese Erfindung ein nach dem Charentais-Verfahren gewonnenes, zu Weinbrand weiterverarbeitbares, Produkt mit 56 % vol. bis 74 % vol. Ethanolgehalt, unabhängig davon, ob dieses Weindestillat durch einmalige oder zweifache Destillation in der Charentais-Apperatur gewonnen wird. Grundsätzlich ist jedes der vorgenannten Weindestillate erfindungsgemäß einsetzbar. Die durchgeführten Untersuchungen haben jedoch gezeigt, daß vorteilhafterweise ein einmal destilliertes Weindestillat mit vorzugsweise 63 % vol. bis 72 % vol., bevorzugt mit 64 % vol. bis 66 % vol. Ethanol zu verwenden ist. Von diesem ungereiften Weindestillat sollten in der Komposition 600 bis 1000 Volumenanteile enthalten sein. Weiterhin wurde gefunden, daß besonders aus spanischen Weinen und/oder Brennweinen nach dem Charentais-Verfahren erzeugte Weindestillate erfindungsgemäß geeignet sind; in die Komposition sind bevorzugt 650 bis 800 Volumenanteile einzubringen.

Als Bestandteil der erfindungsgemäßen Komposition sollte das Rumdestillat oder die Mischung aus Rumdestillaten vorzugsweise ein Jamaica Rumdestillat sein, oder von diesem mindestens 50 % vol. enthalten. Die durchgeführten Untersuchungen haben ergeben, daß die besten Ergebnisse mit einem Jamaica Rumdestillat, das eine zarte Juchten-Ananas-Note aufweist, zu erreichen sind, insbesondere, wenn von diesem Destillat 8 bis 12 Volumenteile, bevorzugt 9 bis 11 Volumenteile, in der Komposition vorliegen. Das Jamaica Rumdestillat sollte vorzugsweise 62 % vol. bis 66 % vol. Ethanol enthalten. Bei dem natürlichen Brandyaroma handelt es sich um handelsübliche Produkte.

Für das Einbringen der erfindungsgemäßen Komposition aus ungereiften kupferblasenfrisches Weindestillat, Rumdestillat und natürlichem Brandyaroma in das alkoholische Getränk mit einem Ethanolgehalt von 20 % vol. bis 40 % vol. bestehen erfindungsgemäß keine Einschränkungen. Vorzugsweise wird zuerst die erfindungsgemäße Komposition gemischt, diese sodann mit dem erforderlichen Volumen Primasprit aufgesprittet und nunmehr mit enthärtetem Wasser auf Trinkstärke eingestellt. Das erhaltene Erzeugnis ist praktisch farblos und blank. Es kann mit den an sich bekannten Mittel Typage und/oder Farbstoffen versetzt werden.

Die durchgeführten Untersuchungen zeigten in nicht voraussehbarer Weise, daß in der fertigen Spirituose 15 % vol. erfindungsgemäße Komposition für das Erreichen des Erfindungszieles ausreichend sind. Höhere Volumenanteile Komposition im Getränk sind möglich, aber nicht effektiv. Erfindungsgemäß müssen in der Spirituose jedoch mindestens 5 % vol. Komposition enthalten sein; niedrigere Anteile führen sprungartig zu unvorteilhafter Sensorik. Es wurde festgestellt, daß das alkoholische Getränk vorteilhafterweise 6 % vol. bis 10 % vol. erfindungsgemäße Komposition aufweisen sollte.

Die Technologie der Herstellung der alkoholischen Getränke mit einem weibrandähnlichem Geschmack und mit einem Ethanolgehalt von 20 % vol. bis 40 % vol. ist an sich bekannt.

### Ausführungsbeispiel:

Die Erfindung wird durch nachfolgendes Ausführungsbeispiel näher erläutert, wobei die Erfindung nicht auf dieses Beispiel beschränkt ist.

### Beispiel 1: vorbekannte Spirituose 32 % vol. Ethanol (Gegenbeispiel)

In einem Rührtank wurden 8,4 l eines sechs Monate in Eichenholzfässern gelagertem Weindestillates mit einem Ethanolgehalt von 70 % vol. mit 26,5 l Primasprit und 1,2 l Weinbrandtypage (Ethanolgehalt 44,5 % vol.) gemischt, sodann mit 30 l enthärtetem Wasser verdünnt, mit 0,1 kg Kulör angefärbt, weiter gemischt und schließlich mit enthärtetem Wasser auf Trinkstärke herabgesetzt. Die beruhigte Spirituose wurde filtriert und nunmehr analysiert.

Aussehen: blank, klar und gelbbraun.
Geruch: weinig, mit Weinbouquetstoffen harmonisch abgerundet.
Geschmack: weinige Note, harmonisch abgerundet, mild und weich.

### Beispiel 2: erfindungsgemäßes Getränk 25 % vol. Ethanol

In einem Rührgefäß wurde eine Komposition aus 70 l eines nicht in Holzfässern gelagerten, kupferblasenfrischen Weindestillates mit einem Ethanolgehalt von 65 % vol., das aus Brennwein durch einmalige Destillation in der Charantais-Apperatur hergestellt wurde, mit 1 l eines Jamaica Rumdestillates mit 62 % vol. Ethanol und einem ausgeprägtem Juchten-Ananas-Charakter sowie 1 l eines handelsüblichen Brandyaromas (Produktnummer 890/10785 R.. Wild GmbH & Co. KG Heidelberg) mit einem Ethanolgehalt von 60,3 % vol. gemischt. Von der fertigen Komposition werden 7 l mit Primasprit und sodann mit enthärtetem Wasser gemischt, so daß 100 l der erfindungsgemässen Spirituose mit einem Ethanolgehalt von 25 % vol. erhalten wird. Nach dem Filtrieren der rohen Spirituose erfolgt die Analyse.

Aussehen: blank, klar und farblos.
Geruch: wie im Beispiel 1, jedoch, der weinige Charakter ist natürlicher.
Geschmack: wie in Beispiel 1, jedoch reintöniger.

### Beispiel: 3: erfindungsgemäßes Getränk 25 % vol. Ethanol

In einem Rührgefäß wurde eine Komposition aus 8 l des Weindestillates gemäß Beispiel 2, 100 ml eines natürlichen Aromas für Brandy (62 % vol. Ethanol) der Firma Dragoco in Holzminden (BRD) und 100 ml eines Rumdestillates gemäß Beispiel 2 gemischt. Der fertigen Komposition wurden 20 l Primasprit und sodann enthärtetes Wasser zugegeben bis die erfindungsmäßige Spirituose einen Ethanolanteil von 25 % vol. aufweist. Nach der Filtration der beruhigten Spirituose erfolgte die Analyse.
- **Aussehen:**: blank, klar, farblos.
- **Geruch:**: wie im Beispiel 1, jedoch der weinige Charakter ist harmonischer.
- **Geschmack:**: wie im Beispiel 1, jedoch reintöniger und harmonischer, voll abgerundet.

### Beispiel 4: erfindungsgemäßes Getränk 25 % vol. Ethanol

In einem Rührgefäß wurde eine Komposition aus 8 l Weindestillat gemäß Beispiel 2, 120 ml eines natürlichen Aroma Brandy (37 % vol. Ethanol) der Firma Metayer Aromatiques Industries in Straßbourg (FR) und 100 ml eines Rumdestillates gemäß Beispiel 2 gemischt. Der fertigen Komposition werden 20 l Primasprit und sodann enthärtetes Wasser zugesetz bis eine erfindungsgemäße Spirituose mit 25 % vol. Ethanol entstand. Nach der Filtration der beruhigten Spirituose erfolgte die Analyse.
- **Aussehen:**: blank, klar, farblos.
- **Geruch:**: wie in Beispiel 1, jedoch der weinige Charakter ist harmonischer.
- **Geschmack:**: wie in Beispiel 1, jedoch reintöniger und harmonischer, voll abgerundet.

### Beispiel 5: erfindungsgemäßes Getränk 32 % vol. Ethanol

Zu vorgelegten 32 l Primasprit wurden 9,2 l des Weindestillates gemäß Beispiel 2, 148 ml des natürlichen Brandyaromas entsprechend Beispiel 3 und 100 ml Rumdestillat gemäß Beispiel 2 gegeben, die Flüssigkeit gemischt und hierbei mit enthärtetem Wasser auf 32 % vol. Ethanol eingestellt. Nach Beruhigung der Spirituose erfolgte die Filtration und die Analyse.
- **Aussehen:**: blank, klar, farblos.
- **Geruch:**: wie im Beispiel 1, jedoch harmonischer, leichte Andeutung von Vanille.
- **Geschmack:**: wie im Beispiel 1, jedoch reintöniger mit leicht angedeuteter Schärfe.

### Beispiel 6: erfindungsgemäßes Getränk 25 % vol. Ethanol

In einem Rührgefäß werden 20 l Primasprit vorgelegt. Hierzu kamen 8 l des Weindstillates gemäß Beispiel 2, 70 ml Brandyaroma eintsprechend Beispiel 3, 70 ml Brandyaroma gemäß Beispiel 4 und 100 ml Rumdestillat entsprechend Beispiel 2. Unter intensiven Rühren wird nunmehr enthärtetes Wasser zugegeben bis die Trinkstärke von 25 % vol. Ethanol erreicht ist. Nach Beruhigung der Mischung wird diese filtriert und sodann analysiert.
- **Aussehen:**: blank, klar, farblos.
- **Geruch:**: wie im Beispiel 1, jedoch der weinige Charakter ist ausgeprägter und natürlicher.
- **Geschmack:**: wie im Beispiel 1, jedoch reintöniger und harmonischer.

## Patentansprüche

1. Komposition zur Herstellung alkoholischer Getränke mit weinbrandähnlichem Geschmack und einem Ethanolgehalt von 20 % vol. bis 40 % vol., **dadurch gekennzeichnet,** daß die Komposition aus
- 400 bis 1200 Volumenteilen, vorzugsweise 600 bis 1000 Volumenteilen, bevorzugt 650 bis 800 Volumenteilen kupferblasenfrisches Weindestillat,
- 6 bis 14 Volumenteilen, vorzugsweise 8 bis 12 Volumenteilen, bevorzugt 9 bis 11 Volumenteilen eines Rumdestillates oder einer Mischung von Rumdestillaten mit einem Ethanolgehalt von 60 % vol. bis 68 % vol., vorzugsweise von 62 % vol. bis 66 % vol.,
- 5 bis 15 Volumenteilen, vorzugsweise 7 bis 12 Volumenteilen, bevorzugt 9 bis 11 Volumenteilen natürliches Brandyaroma besteht.

2. Komposition nach Anspruch 1, **dadurch gekennzeichnet,** daß das kupferblasenfrische Weindestillat ein nach dem Charentais-Verfahren gewonnenes Erzeugnis mit einem Ethanolgehalt von 56 % vol. bis 74 % vol., vorzugsweise von 63 % vol. bis 70 % vol. darstellt.

3. Komposition nach Anspruch 1 oder 2, **dadurch gekennzeichnet,** daß das kupferblasenfrische Weindestillat ein aus spanischen Weinen und/oder Brennweinen erzeugtes Produkt darstellt.

4. Komposition nach einem der vorherigen Ansprüche, **dadurch gekennzeichnet,** daß das Rumdestillat oder die Mischung aus Rumdestillaten 50 % vol. bis 100 % vol. Volumenanteile Jamaica Rumdestillat enthält.

5. Verfahren zur Herstellung eines alkoholischen Getränkes mit weinbrandähnlichem Geschmack und mit einem Ethanolgehalt von 20 % vol. bis 40 % vol. durch Mischen der Roh- und Hilfsstoffe, Filtration der Mischung, Abfüllen der erhaltenen losen Ware und Konfektionierung, **dadurch gekennzeichnet,** daß die Mischung der Roh- und Hilfsstoffe 5 % vol. bis 15 % vol., vorzugsweise 6 % vol. bis 10 % vol. Volumenanteile der Komposition gemäß einem der Ansprüche 1 bis 4 enthält.
